# EUROPEAN PATENT APPLICATION

(11) **EP 4 808 053 A1**
(43) Date of publication of application: **16.09.2026**
(21) Application number: 24892811.1
(22) Date of filing: 02.07.2024
(51) Int. Cl.: H04L 25/02

(54) **COMMUNICATION METHOD AND APPARATUS**

(30) Priority: 24.11.2023 CN 202311590914
(71) Applicant: Huawei Technologies Co., Ltd., Shenzhen, Guangdong 518129 (CN)
(72) Inventor: YU, Tianhang, Shenzhen, Guangdong 518129 (CN); YANG, Ruonan, Shenzhen, Guangdong 518129 (CN); LUO, Hejia, Shenzhen, Guangdong 518129 (CN); WANG, Jun, Shenzhen, Guangdong 518129 (CN)
(74) Representative: Körber, Martin Hans
(86) International application number: PCT/CN2024/103212
(87) International publication number: WO 2025/107647

(57) **Abstract**

A communication method and apparatus, relating to the field of communication technologies, are provided. A reference signal of a terminal and a reference signal of another terminal are estimated, improving channel estimation accuracy of each terminal. The method is applied to a first apparatus (for example, a first terminal) and includes: The first apparatus receives first indication information and second indication information, where the first indication information indicates a first reference signal, the second indication information indicates a second reference signal, the first reference signal is a reference signal of the first apparatus, and the second reference signal is a reference signal of a second apparatus; the first apparatus receives, based on the first indication information and the second indication information, the first reference signal and a fourth reference signal, where the fourth reference signal belongs to the second reference signal; and the first apparatus performs channel estimation based on the first reference signal and the fourth reference signal.

## Description

This application claims priority to Chinese Patent Application No. 202311590914.3, filed with the China National Intellectual Property Administration on November 24, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

During communication between a base station and terminals, the base station may send, to the terminals, reference signals, for example, demodulation reference signals (demodulation reference signals, DMRSs) in a 5G system, and each terminal may perform downlink channel estimation based on its respective reference signal. How to improve channel estimation accuracy of the terminal is a problem that needs to be resolved.

### SUMMARY

This application provides a communication method and apparatus, to improve accuracy of channel estimation performed by a terminal.

To achieve the foregoing objective, embodiments of this application provide the following technical solutions.

According to a first aspect, a communication method is provided, and is applied to a first apparatus. The method includes: receiving first indication information and second indication information, where the first indication information indicates a first reference signal, the second indication information indicates a second reference signal, the first reference signal is a reference signal of the first apparatus, and the second reference signal is a reference signal of a second apparatus; receiving, based on the first indication information and the second indication information, the first reference signal and a fourth reference signal, where the fourth reference signal belongs to the second reference signal; and performing channel estimation based on the first reference signal and the fourth reference signal.

According to this solution, the first apparatus may perform channel estimation by using the reference signal of the first apparatus and a reference signal other than the reference signal of the first apparatus, so that accuracy of channel estimation is improved by adding a reference signal used for channel estimation.

With reference to the first aspect, in a possible design, the fourth reference signal is the entire second reference signal.

With reference to the first aspect, in a possible design, the fourth reference signal is a portion of the second reference signal.

With reference to the first aspect, in a possible design, the first reference signal and the second reference signal are formed using a same precoding codebook.

With reference to the first aspect, in a possible design, a first beam serves the first apparatus and the second apparatus.

According to this solution, the first apparatus may receive the first reference signal and the second reference signal through a same beam, to perform channel estimation by using the second reference signal.

With reference to the first aspect, in a possible design, a time-frequency resource of the first reference signal is different from a time-frequency resource of the second reference signal. According to this solution, the first apparatus receives the second reference signal on a time-frequency resource other than the time-frequency resource of the first reference signal, so that the first apparatus can obtain more reference signals for channel estimation, to improve a channel estimation effect.

That the first indication information indicates the first reference signal includes: The first indication information indicates one or more of the following of the first reference signal: configuration information of the first reference signal, the time-frequency resource of the first reference signal, or an antenna port number of the first reference signal. Alternatively, that the second indication information indicates the second reference signal includes: The second indication information indicates one or more of the following of the second reference signal: configuration information of the second reference signal, the time-frequency resource of the second reference signal, or an antenna port number of the second reference signal.

With reference to the first aspect, in a possible design, the configuration information of the first reference signal includes one or more of the following: a position of the first reference signal, a type of the first reference signal, or a time domain symbol length of the first reference signal.

With reference to the first aspect, in a possible design, the configuration information of the second reference signal includes one or more of the following: a position of the second reference signal, a type of the second reference signal, or a time domain symbol length of the second reference signal.

With reference to the first aspect, in a possible design, before the receiving the fourth reference signal, the method further includes: sending third indication information, where the third indication information indicates a capability of the first apparatus to perform channel estimation based on a third reference signal, and the third reference signal is different from the first reference signal.

With reference to the first aspect, in a possible design, the second indication information is determined based on the third indication information.

According to this solution, the third reference signal is a reference signal other than the first reference signal. The first apparatus has the capability to perform channel estimation based on the third reference signal, so that a radio access network device delivers the second indication information based on the capability.

With reference to the first aspect, in a possible design, if the third indication information indicates that the first apparatus has the capability to perform channel estimation based on the third reference signal, a radio access network device sends the second indication information. Therefore, the radio access network device may deliver the second indication information when the first apparatus has the capability.

With reference to the first aspect, in a possible design, if the third indication information indicates that the first apparatus does not have the capability to perform channel estimation based on the third reference signal, a radio access network device does not send the second indication information. Therefore, the radio access network device may not deliver the second indication information when the first apparatus does not have the capability, so that communication resources are saved.

With reference to the first aspect, in a possible design, the third indication information indicates a capability level, and that the second indication information is determined based on the third indication information includes: The time-frequency resource of the second reference signal indicated by the second indication information is determined based on the third indication information.

According to this solution, the radio access network device may allocate a second reference signal with different time-frequency resources to the first apparatus based on the capability level of the first apparatus, to improve utilization of communication resources.

With reference to the first aspect, in a possible design, when the third indication information indicates that the first apparatus has a first capability to perform channel estimation based on the third reference signal, the second indication information indicates a first time-frequency resource; when the third indication information indicates that the first apparatus has a second capability to perform channel estimation based on the third reference signal, the second indication information indicates a second time-frequency resource; and when the first capability is greater than the second capability, the first time-frequency resource is greater than the second time-frequency resource.

According to this solution, when the capability level of the first apparatus is high, the radio access network device may indicate a second reference signal with a large number of time-frequency resources, so that the first apparatus can perform channel estimation based on more reference signals, to improve the capability of the first apparatus to perform channel estimation.

With reference to the first aspect, in a possible design, that the second indication information indicates the information about the second reference signal includes: The second indication information indicates, through downlink control information DCI, the time-frequency resource of the second reference signal and/or the antenna port number of the second reference signal.

With reference to the first aspect, in a possible design, that the second indication information indicates the information about the second reference signal includes: The second indication information indicates, through radio resource control RRC signaling, the configuration information of the second reference signal.

With reference to the first aspect, in a possible design, the second indication information is received by using a broadcast signal.

With reference to the first aspect, in a possible design, before the receiving the fourth reference signal, the method further includes: receiving fourth indication information, where the fourth indication information indicates whether a radio access network device has sent the second reference signal.

With reference to the first aspect, in a possible design, the fourth indication information is received by using a MAC CE, a broadcast signal, or RRC signaling.

With reference to the first aspect, in a possible design, the fourth indication information indicates a format of the downlink control information DCI.

With reference to the first aspect, in a possible design, if the fourth indication information indicates that the radio access network device has sent the second reference signal, the method further includes: receiving DCI by using a first format, where the DCI in the first format includes a field of the second indication information.

With reference to the first aspect, in a possible design, if the fourth indication information indicates that the radio access network device does not send the second reference signal, the method further includes: receiving DCI by using a second format, where the DCI in the second format does not include a field of the second indication information.

According to this solution, the first apparatus may parse, based on content indicated by the fourth indication information, the DCI by using a DCI format corresponding to the fourth indication information, to reduce resources consumed by blindly detecting DCI in different formats.

With reference to the first aspect, in a possible design, the fourth indication information is a first bit in the DCI, and the first bit indicates whether the radio access network device sends the second reference signal.

With reference to the first aspect, in a possible design, the second indication information is received by using the broadcast signal.

With reference to the first aspect, in a possible design, the receiving the second indication information includes: if the fourth indication information indicates that the radio access network device sends the second indication information, receiving the second indication information by using the broadcast signal.

According to this solution, the radio access network device may send the fourth indication information by using the DCI, so that the first apparatus can determine, based on the fourth indication information, whether to receive the second indication information by using the broadcast signal.

With reference to the first aspect, in a possible design, the first bit is an initialization bit of a demodulation reference signal DMRS sequence.

With reference to the first aspect, in a possible design, the first reference signal and the second reference signal are demodulation reference signals DMRSs.

According to a second aspect, a communication method is provided, and includes: sending first indication information and second indication information, where the first indication information indicates a first reference signal, the second indication information indicates a second reference signal, the first reference signal is a reference signal of a first apparatus, and the second reference signal is a reference signal of a second apparatus; and sending the first reference signal and the second reference signal.

With reference to the second aspect, in a possible design, the first reference signal and the second reference signal are formed using a same precoding codebook.

With reference to the second aspect, in a possible design, a first beam serves the first apparatus and the second apparatus.

With reference to the second aspect, in a possible design, a time-frequency resource of the first reference signal is different from a time-frequency resource of the second reference signal.

With reference to the second aspect, in a possible design, that the first indication information indicates the first reference signal includes: The first indication information indicates one or more of the following of the first reference signal: configuration information of the first reference signal, the time-frequency resource of the first reference signal, or an antenna port number of the first reference signal. Alternatively, that the second indication information indicates the second reference signal includes: The second indication information indicates one or more of the following of the second reference signal: configuration information of the second reference signal, the time-frequency resource of the second reference signal, or an antenna port number of the second reference signal.

With reference to the second aspect, in a possible design, the configuration information of the first reference signal includes one or more of the following: a position of the first reference signal, a type of the first reference signal, or a time domain symbol length of the first reference signal.

With reference to the second aspect, in a possible design, the configuration information of the second reference signal includes one or more of the following: a position of the second reference signal, a type of the second reference signal, or a time domain symbol length of the second reference signal.

With reference to the second aspect, in a possible design, before the sending the second reference signal, the method further includes: receiving third indication information, where the third indication information indicates a capability of the first apparatus to perform channel estimation based on a third reference signal, and the third reference signal is different from the first reference signal.

With reference to the second aspect, in a possible design, the second indication information is determined based on the third indication information.

With reference to the second aspect, in a possible design, if the third indication information indicates that the first apparatus has the capability to perform channel estimation based on the third reference signal, the second indication information is sent.

With reference to the second aspect, in a possible design, if the third indication information indicates that the first apparatus does not have the capability to perform channel estimation based on the third reference signal, the second indication information is not sent.

With reference to the second aspect, in a possible design, the third indication information indicates a capability level, and that the second indication information is determined based on the third indication information includes: The time-frequency resource of the second reference signal indicated by the second indication information is determined based on the third indication information.

With reference to the second aspect, in a possible design, when the third indication information indicates that the first apparatus has a first capability to perform channel estimation based on the third reference signal, the second indication information indicates a first time-frequency resource; when the third indication information indicates that the first apparatus has a second capability to perform channel estimation based on the third reference signal, the second indication information indicates a second time-frequency resource; and when the first capability is greater than the second capability, the first time-frequency resource is greater than the second time-frequency resource.

With reference to the second aspect, in a possible design, that the second indication information indicates the information about the second reference signal includes: The second indication information indicates, through downlink control information DCI, the time-frequency resource of the second reference signal and/or the antenna port number of the second reference signal.

With reference to the second aspect, in a possible design, that the second indication information indicates the information about the second reference signal includes: The second indication information indicates, through radio resource control RRC signaling, the configuration information of the second reference signal.

With reference to the second aspect, in a possible design, the second indication information is sent by using a broadcast signal.

With reference to the second aspect, in a possible design, before the sending the second reference signal, the method further includes: sending fourth indication information, where the fourth indication information indicates whether the second reference signal is sent.

With reference to the second aspect, in a possible design, the fourth indication information is sent by using a MAC CE, a broadcast signal, or RRC signaling.

With reference to the second aspect, in a possible design, the fourth indication information indicates a format of the downlink control information DCI.

With reference to the second aspect, in a possible design, if the fourth indication information indicates that a radio access network device has sent the second reference signal, the method further includes: sending DCI in a first format, where the DCI in the first format includes a field of the second indication information.

With reference to the second aspect, in a possible design, if the fourth indication information indicates that a radio access network device does not send the second reference signal, the method further includes: sending DCI in a second format, where the DCI in the second format does not include a field of the second indication information.

With reference to the second aspect, in a possible design, the fourth indication information is a first bit in the DCI, and the first bit indicates whether the second reference signal is sent.

With reference to the second aspect, in a possible design, the second indication information is sent by using the broadcast signal.

With reference to the second aspect, in a possible design, sending the second indication information includes: if the fourth indication information indicates that the radio access network device sends the second indication information, sending the second indication information by using the broadcast signal.

With reference to the second aspect, in a possible design, the first bit is an initialization bit of a demodulation reference signal DMRS sequence.

With reference to the second aspect, in a possible design, the sending the second indication information includes: sending the second indication information when one or more of the following conditions are satisfied. A number of subcarriers of the second reference signal is greater than or equal to a first threshold. Alternatively, a ratio of the number of subcarriers of the second reference signal to a number of FFT points is greater than or equal to a second threshold, where *N_{FFT}* is determined based on a number of subcarriers of the first reference signal, and satisfies the following formula: ${N}_{FFT} = {2}^{\left⌈{log}_{2}^{{N}_{SC}}\right⌉ + M} + P .$

M and P are nonnegative integers, *N_{SC}* is the number of subcarriers of the first reference signal, and ┌ ┐ represents a rounding-up operation. Alternatively, a modulation and coding scheme (Modulation and Coding Scheme, MCS) of the first apparatus is less than or equal to a third threshold.

According to this solution, the radio access network device may send the second indication information when the foregoing condition is satisfied, so that communication resources are saved.

With reference to the second aspect, in a possible design, the first reference signal and the second reference signal are demodulation reference signals DMRSs.

According to a third aspect, a computer program product is provided. The computer program product includes a computer program or instructions. When the computer program or the instructions are run on a computer, the computer is caused to perform the communication method according to any design in any one of the foregoing aspects.

According to a fourth aspect, a communication apparatus is provided. The communication apparatus is configured to implement the foregoing communication method. The communication apparatus includes a corresponding module, unit, or means (means) for implementing the foregoing communication method. The module, unit, or means may be implemented by hardware, software, or hardware executing corresponding software. The hardware or the software includes one or more modules or units corresponding to the foregoing functions.

According to a fifth aspect, a communication apparatus is provided. The communication apparatus includes a processor and a memory. The memory is configured to store computer instructions, and when the processor executes the instructions, the communication apparatus is caused to perform the communication method according to any one of the foregoing aspects.

According to a sixth aspect, a communication apparatus is provided, and includes a processor. The processor is coupled to a memory, and the processor is configured to read and execute instructions in the memory, to cause the communication apparatus to perform the communication method according to any one of the foregoing aspects.

According to a seventh aspect, a chip system is provided. The chip system includes a processor and an input/output port. The processor is configured to implement a processing function related to the communication method according to any one of the foregoing aspects, and the input/output port is configured to implement a receiving/sending function related to the communication method according to any one of the foregoing aspects.

In a possible design, the chip system further includes a memory, and the memory is configured to store program instructions and data for implementing a function related to the communication method according to any one of the foregoing aspects.

The chip system may include a chip, or may include a chip and another discrete apparatus.

According to an eighth aspect, a communication system is provided. The system includes a first apparatus and a radio access network device. The first apparatus performs the communication method in the first aspect, and the radio access network device performs the communication method in the second aspect.

With reference to the eighth aspect, in a possible design, a second apparatus is further included, and the radio access network device serves the first apparatus and the second apparatus through a first beam.

With reference to the eighth aspect, in a possible design, a first reference signal of the first apparatus and a second reference signal of the second apparatus are formed using a same precoding codebook.

According to a ninth aspect, a computer-readable storage medium is provided. The computer-readable storage medium stores instructions. When the instructions are run on a communication apparatus, the communication apparatus is caused to perform the communication method according to any design in any one of the foregoing aspects.

It may be understood that, for beneficial effects that can be achieved by the method, the chip system, the communication system, the communication apparatus, the computer-readable storage medium, and the computer program product provided in the second aspect to the ninth aspect, refer to beneficial effects in the first aspect and any possible implementation provided above. Details are not described herein again.

### BRIEF DESCRIPTION OF DRAWINGS

FIG. 1 is a diagram of an architecture of a communication system to which an embodiment of this application is applied;
FIG. 2 is a flowchart of a communication method according to an embodiment of this application;
FIG. 3 is a diagram of effect comparison between an embodiment of this application and a conventional technology;
FIG. 4 is another diagram of effect comparison between an embodiment of this application and a conventional technology;
FIG. 5 is a flowchart of another communication method according to an embodiment of this application;
FIG. 6a to FIG. 6c are diagrams of spectrum positions according to an embodiment of this application;
FIG. 7 is a diagram in which a first apparatus reports a capability level according to an embodiment of this application;
FIG. 8 is a flowchart of another communication method according to an embodiment of this application;
FIG. 9 is a diagram of a communication apparatus according to an embodiment of this application; and
FIG. 10 is a diagram of another communication apparatus according to an embodiment of this application.

### DESCRIPTION OF EMBODIMENTS

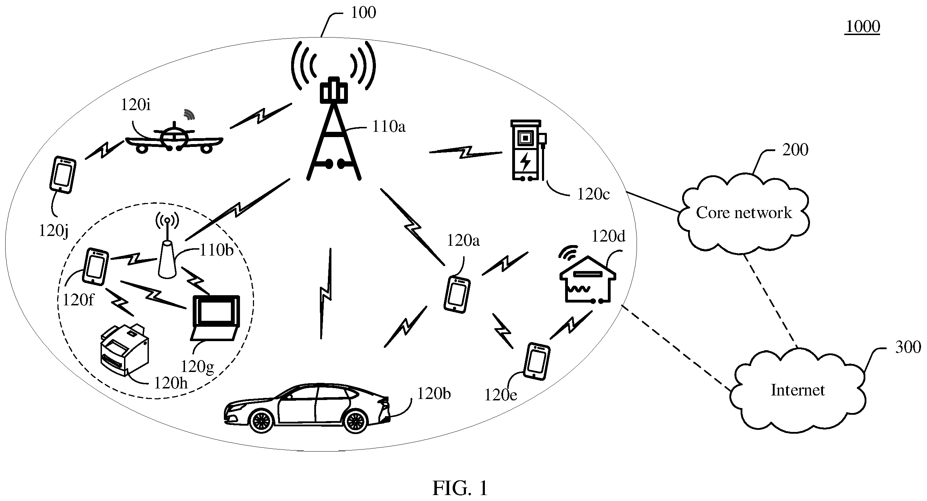

FIG. 1 is a diagram of an architecture of a communication system 1000 to which an embodiment of this application is applied. As shown in FIG. 1, the communication system includes a radio access network (radio access network, RAN) 100. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner. The terminals may be connected to each other in a wired or wireless manner, and the RAN nodes may be connected to each other in a wired or wireless manner. Optionally, the communication system 1000 further includes a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Optionally, the communication system 1000 further includes an internet 300.

The RAN 100 may be an evolved universal terrestrial radio access (evolved universal terrestrial radio access, E-UTRA) system, a new radio (new radio, NR) system, or a future radio access system defined in a 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN entity, a network device or an access node, is configured to help the terminal access the communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may coordinate to help the terminal implement radio access, and different RAN nodes separately implement some functions of the base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes at a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of the software module and the hardware module. For example, the RAN node may be a server loaded with a corresponding software module. A specific technology and a specific device form that are used by the RAN node are not limited in embodiments of this application. For ease of description, the following uses an example in which the base station is used as the RAN node for description.

The terminal is an apparatus having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 may be referred to as a communication apparatus having a function of a base station, and 120a to 120j in FIG. 1 may be referred to as a communication apparatus having a function of a terminal.

Communication between the base station and the terminal, between the base station and the base station, or between the terminal and the terminal may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In this embodiment of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in embodiments of this application are time domain symbols.

The device name and the message name in embodiments of this application are examples. As a system evolves, the device name and the message name may change.

The following describes a precoding codebook and a non-terrestrial network (non-terrestrial network, NTN) in embodiments of this application.

The precoding codebook may also be referred to as a beamforming codebook. A base station adjusts parameters of an antenna by using a codebook, and may perform beamforming for a beam transmitted by the antenna. The codebook may be referred to as a precoding codebook. The base station performs beamforming by using a same precoding codebook, so that the antenna transmits a same beam.

An NTN technology includes satellite communication, high-altitude drones, aircraft networks, the space Internet, and the like. An apparatus for sending signals may precode, by using the same precoding codebook, the signals to be sent to a plurality of devices, that is, communicate with the plurality of apparatuses through a same beam. A channel on which the apparatus for sending signals communicates with a apparatus for receiving signals may be a line of sight (line of sight, LOS) channel. In the NTN technology, the apparatus for sending signals may be a apparatus located in the air. For example, the base station is disposed on the ground, the base station communicates with a satellite, and the satellite forwards signals of the base station to a plurality of terminals, or forwards signals of a plurality of terminals to the base station, so that signals between the base station and the plurality of terminals are transmitted through an LOS path. For another example, the base station is disposed on a satellite, and the base station on the satellite communicates with a plurality of terminals on the satellite, so that signals of the plurality of terminals are transmitted through an LOS path.

In a process of communication between the base station and the terminals, the base station may send, to the terminals, reference signals, for example, demodulation reference signals (demodulation reference signals, DMRSs) in a 5G system, and each terminal may perform downlink channel estimation based on a respective reference signal. How to improve accuracy of channel estimation performed by the terminal is a problem that needs to be resolved.

To improve the accuracy of channel estimation performed by the terminal, embodiments of this application provide a communication method. In the method, a base station sends reference signals to a plurality of terminals, and a terminal (for example, a first apparatus) performs channel estimation based on a reference signal of the terminal and a reference signal of another terminal (for example, a second apparatus), to improve accuracy of channel estimation performed by the terminal.

The following describes implementations of embodiments of this application in detail with reference to the accompanying drawings.

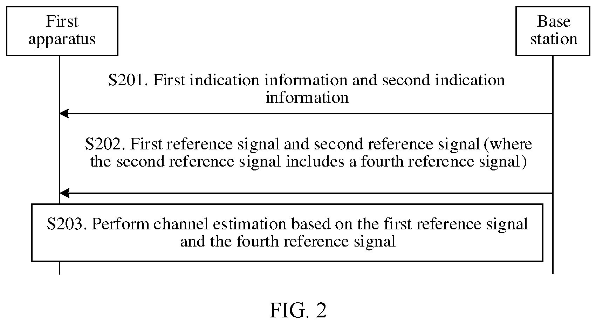

FIG. 2 is a flowchart of a communication method according to an embodiment of this application. As shown in FIG. 2, the method may include the following steps.

S201. A base station sends first indication information and second indication information. Correspondingly, a first apparatus receives the first indication information and the second indication information.

The first indication information indicates a first reference signal, and the first reference signal is a reference signal of the first apparatus. The second indication information indicates a second reference signal, and the second reference signal is a reference signal of a second apparatus.

For example, a reference signal (for example, the first reference signal, the second reference signal, or a fourth reference signal below) may be a demodulation reference signal (dedicated reference signal, DMRS).

In some embodiments, that the first indication information indicates the first reference signal includes: The first indication information indicates one or more of the following of the first reference signal: configuration information of the first reference signal, a time-frequency resource of the first reference signal, or an antenna port number of the first reference signal.

In some embodiments, that the second indication information indicates the second reference signal includes: The second indication information indicates one or more of the following of the second reference signal: configuration information of the second reference signal, a time-frequency resource of the second reference signal, or an antenna port number of the second reference signal.

In some embodiments, the base station and a terminal may store a default value of information about the reference signal (for example, the information about the first reference signal or the information about the second reference signal). When a configuration of the terminal (for example, the first apparatus or the second apparatus) by the base station is a default value, indication may not be performed for the terminal. For example, when the information (such as the configuration information, the time-frequency resource, or the antenna port number) about the first reference signal is a default value, the base station may not send the first indication information, and the terminal may obtain the information about the first reference signal based on the default value. The information about the second reference signal is similar to the information about the first reference signal, and details are not described herein again.

In some embodiments, the configuration information includes one or more of the following: a position (for example, dmrs-AdditionalPosition) of the reference signal, a type (for example, dmrs-Type) of the reference signal, or a time domain symbol length (for example, maxLength) of the reference signal. The position of the reference signal indicates a symbol position of the reference signal in a slot. For example, the reference signal is located in a 3^{rd} symbol. One slot includes 14 symbols, and DCI is located in the first two symbols. The first apparatus may receive the 3^{rd} symbol (that is, a 1^{st} symbol after the DCI), to obtain the reference signal. The type of the reference signal indicates density of the reference signal distributed on a spectrum. For example, the density may be 1/2, 1/3, or the like.

In some embodiments, the base station indicates, through radio resource control (radio resource control, RRC) signaling, the configuration information of the first reference signal and the configuration information of the second reference signal.

For example, a field (DMRS-DownlinkConfig ::= SEQUENCE) for the configuration information in the RRC signaling is as follows, including a DMRS type, an additional DMRS position, a DMRS time domain symbol length, an indication used for scrambling, a PTRS-related configuration, and the like.

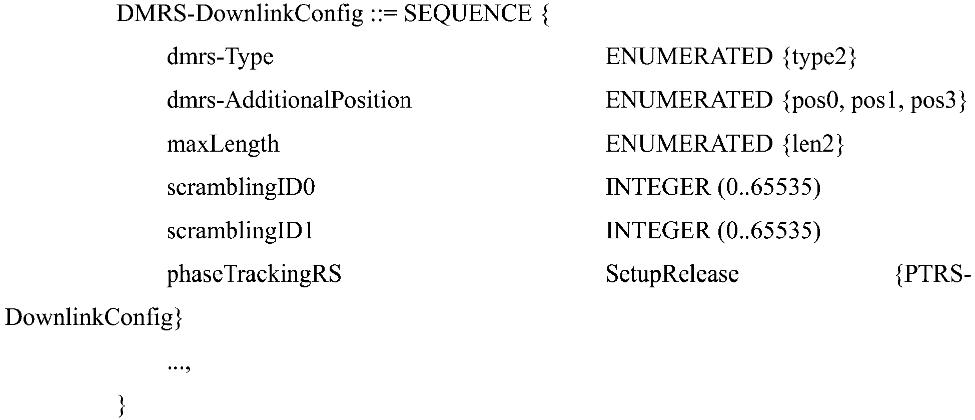

For example, the field for the configuration information in the RRC signaling may be a field indicating the first reference signal. A field (Out-of-band-DMRS-DownlinkConfig ::= SEQUENCE) for the configuration information of the second reference signal in the RRC signaling may be similar to the field in the RRC signaling. For example, refer to the following example.

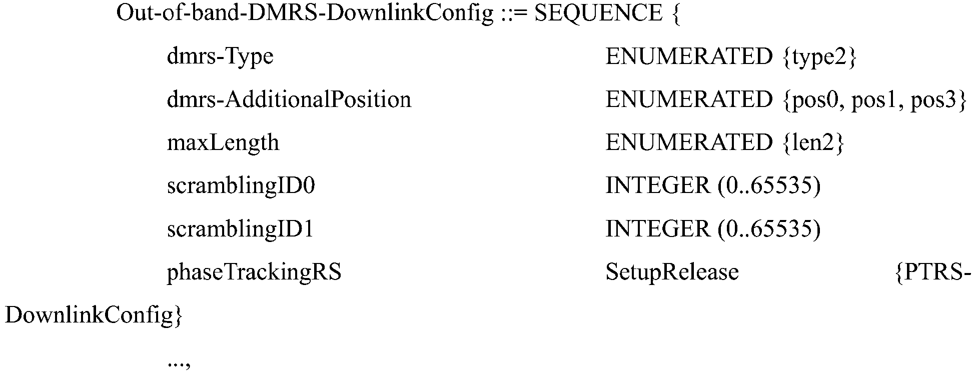

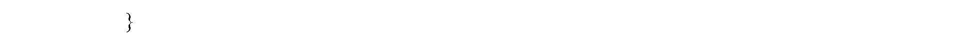

The time-frequency resource may include a subcarrier position of the reference signal in frequency domain and a symbol position of the reference signal in a slot in time domain. In some embodiments, the time-frequency resource of the first reference signal is different from the time-frequency resource of the second reference signal. For example, different time-frequency resources may refer to different frequency bands. For example, a frequency band of the first reference signal is a resource block (Resource Block, RB) 10 to an RB 20, and a frequency band of the second reference signal is an RB 0 to an RB 10 and an RB 20 to an RB 30. In this example, the frequency band of the second reference signal is outside the frequency band of the first reference signal. Therefore, the second reference signal is also referred to as an out-of-band reference signal of the first reference signal, which is referred to as an out-of-band reference signal for short.

For another example, different time-frequency resources may refer to different symbol positions. For example, the first reference signal is located in a symbol 3 in a slot 1, and the second reference signal is located in a symbol 3 in a slot 2. For another example, different time-frequency resources may refer to different slots. For example, the first reference signal is located in a slot 1, and the second reference signal is located in a slot 2.

For another example, different time-frequency resources may refer to different frequency bands and different slots. The foregoing examples of different frequency bands and different slots may be combined, and details are not described herein again.

In some embodiments, the base station may indicate, through downlink control information (downlink control information, DCI), the time-frequency resource of the first reference signal, the antenna port number of the first reference signal, the time-frequency resource of the second reference signal, and the antenna port number of the second reference signal.

For example, the second indication information may indicate, through the DCI, the time-frequency resource of the second reference signal and/or the antenna port number of the second reference signal. The DCI may be in a new DCI format, and the new DCI format includes a field indicating the time-frequency resource of the second reference signal and/or the antenna port number of the second reference signal. Alternatively, an existing DCI format may be used, and a field indicating the time-frequency resource of the second reference signal and/or the antenna port number of the second reference signal is added to the existing DCI format. The first apparatus reads the DCI, to obtain the field indicating the time-frequency resource of the second reference signal and/or the antenna port number of the second reference signal.

In some embodiments, the base station may indicate, through a broadcast signal, the first reference signal and/or the second reference signal. In other words, the first indication information and/or the second indication information are/is sent by using the broadcast message. The base station indicates, through the broadcast signal, a reference signal, and this type of reference signal may be referred to as a beam-level reference signal. For example, if the reference signal is a DMRS, the DMRS may be referred to as a beam-level DMRS. In some embodiments, the broadcast signal may indicate to configure reference signals on a same beam.

It should be noted that, the first apparatus may perform estimation by using a portion of the second reference signal, for example, the fourth reference signal. For more descriptions, refer to the following descriptions.

In some embodiments, the first indication information and the second indication information are sent in a same message. In some other embodiments, the first indication information and the second indication information are sent in different messages.

In some embodiments, the second apparatus is an apparatus other than the first apparatus. There are one or more second apparatuss. For example, as shown in FIG. 1, the first apparatus is 120a, and the second apparatus may be 120b, 120c, 120i, or the like.

In some embodiments, a same precoding codebook is used by a satellite to serve the first apparatus and the second apparatus.

For example, a first beam serves the first apparatus and the second apparatus. In other words, the base station sends the first reference signal of the first apparatus and the second reference signal of the second apparatus through a same beam.

According to this solution, the base station precodes signals of a plurality of terminals (for example, the first apparatus and the second apparatus) by using a same precoding codebook. In other words, the base station sends the signals of the plurality of terminals through a same beam. A terminal uses a reference signal sent by the base station to another terminal on the same beam, in other words, the base station indicates, to the terminal, a reference signal other than a time-frequency resource occupied by a reference signal of the terminal, to improve accuracy of channel estimation, so as to improve downlink transmission performance.

The second reference signal indicated by the second indication information may be all reference signals of second apparatuss, or may be a portion of the reference signals of the second apparatuss. For example, the second apparatuss include a second apparatus 1 to a second apparatus 3, and frequency bands of the second apparatus 1 to the second apparatus 3 are in an RB 0 to an RB 10, an RB 20 to an RB 30, or the RB 30 to an RB 40. The base station may indicate, to the first apparatus, a portion of reference signals of the second apparatuss (the second apparatus 1 and the second apparatus 2), to be specific, indicate that frequency bands of the reference signals of the second apparatuss are the RB 0 to the RB 10 and the RB 20 to the RB 30. Alternatively, the base station indicates, to the first apparatus, all reference signals of the second apparatuss, to be specific, indicates that frequency bands of the reference signals of the second apparatuss may be the RB 0 to the RB 10 and the RB 20 to the RB 40.

S202. The base station sends the first reference signal and the second reference signal. Correspondingly, the first apparatus receives, based on the first indication information and the second indication information, the first reference signal and the fourth reference signal, where the fourth reference signal belongs to the second reference signal.

In some embodiments, the fourth reference signal is the entire second reference signal. For example, the frequency band of the second reference signal sent by the base station is the RB 0 to the RB 10 and the RB 20 to the RB 30. The first apparatus may receive the second reference signal in the RB 0 to the RB 10 and the RB 20 to the RB 30, in other words, the first apparatus receives all of the reference signals in the second reference signal from the base station, and a frequency band of the fourth reference signal is the RB 0 to the RB 10 and the RB 20 to the RB 30.

In some other embodiments, the fourth reference signal is a portion of the second reference signal. For example, the frequency band of the second reference signal sent by the base station is the RB 0 to the RB 10 and the RB 20 to the RB 30. The first apparatus may receive the second reference signal in the RB 0 to the RB 10, in other words, a frequency band of the fourth reference signal is the RB 0 to the RB 10.

The first apparatus may determine the received fourth reference signal based on a channel estimation capability. For example, each RB includes 12 subcarriers, the reference signal of the first apparatus includes 10 RBs, the frequency band of the reference signal of the second apparatus 1 is the RB 0 to the RB 10, and the frequency band of the reference signal of the second apparatus 2 is the RB 20 to the RB 30. If the first apparatus may perform channel estimation based on 512 subcarriers, the first apparatus may receive the second reference signal (with 240 subcarriers in total) in the RB 0 to the RB 10 and the RB 20 to the RB 30, in other words, the fourth reference signal is the entire second reference signal. If the first apparatus may perform channel estimation based on 256 subcarriers, the first apparatus may receive the second reference signal (with 120 subcarriers in total) in the RB 0 to the RB 10, in other words, the fourth reference signal is a portion of the second reference signal. In this solution, the first reference signal already occupies 120 subcarriers, and the first apparatus obtains subcarriers of the second apparatus 1 to obtain 240 subcarriers. In this case, the first apparatus can further process only 16 subcarriers. If the first apparatus further obtains subcarriers of the second apparatus 2, the first apparatus additionally obtains 104 subcarriers that exceed a processing capability. Therefore, the first apparatus may no longer obtain the subcarriers of the second apparatus 2.

S203. The first apparatus performs channel estimation based on the first reference signal and the fourth reference signal.

It should be noted that, for a specific method for performing channel estimation by the first apparatus based on the fourth reference signal in this embodiment of this application, refer to a method for performing channel estimation by a first apparatus based on a reference signal of the first apparatus in a related technology. Details are not described herein.

In a conventional technology, a first apparatus performs channel estimation based only on a reference signal of the first apparatus. However, in this embodiment of this application, the satellite uses the same precoding codebook to precode the second reference signal and the first reference signal, and the first apparatus performs channel estimation based on the reference signal of the first apparatus and a reference signal of another apparatus, that is, performs channel estimation based on more reference signals, to improve accuracy of channel estimation.

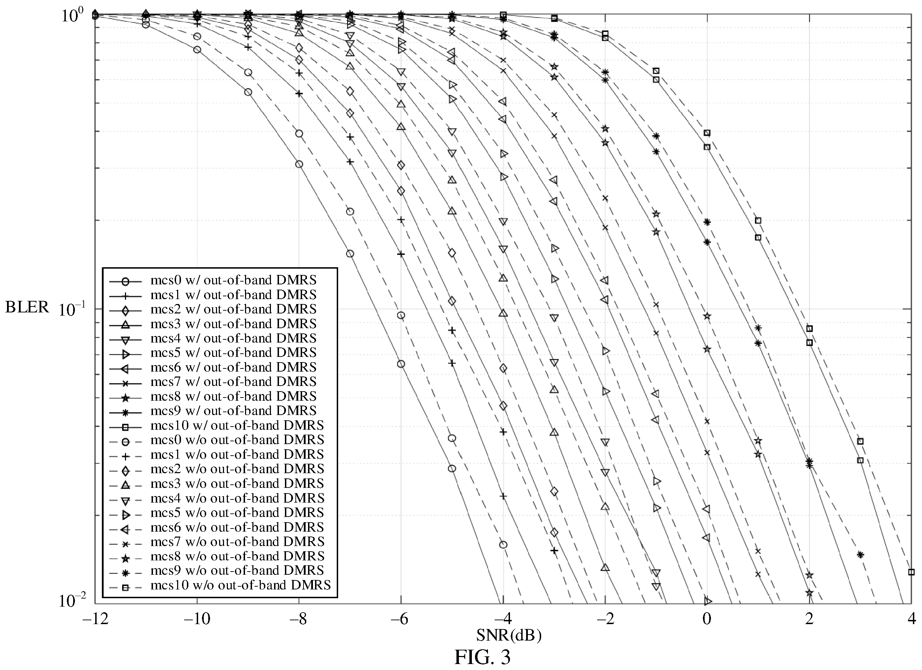

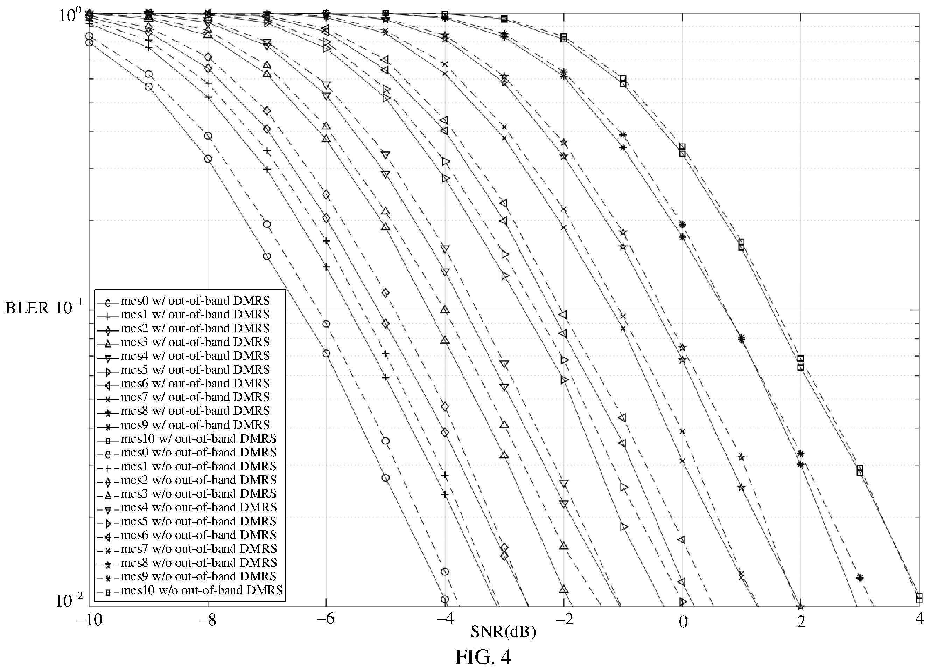

For example, FIG. 3 and FIG. 4 are diagrams of performance comparison between a block error rate (block error rate, BLER) obtained by using the method in this embodiment of this application and a block error rate (block error rate, BLER) obtained by performing channel estimation by a terminal based only on a reference signal of the terminal in a conventional technology. Solid lines represent the BLER obtained in the conventional technology, and dashed lines represent the BLER obtained by using the method in this embodiment of this application. Lines with same patterns represent a group of comparison lines. For example, two lines with circles on the leftmost are a group of comparison lines. In the diagrams of performance comparison in FIG. 3 and FIG. 4, an example in which a number of fast Fourier transform (fast Fourier transform, FFT) points is 512 is used. The number of FFT points needs to be greater than or equal to an integral power of 2 of a number of valid subcarriers. Unless otherwise specified, an example of a number of subcarriers in this embodiment of this application is the number of valid subcarriers. In FIG. 3, a frequency domain resource of the first reference signal uses 22 RBs, that is, 22 x 12 = 264 subcarriers, and 248 subcarriers other than subcarriers of the first reference signal. In FIG. 4, a frequency domain resource of the first reference signal uses 32 RBs, that is, 32 x 12 = 384 subcarriers, and 128 subcarriers other than subcarriers of the first reference signal. Density of 1/2 is used for a DMRS. To be specific, a number of subcarriers of the fourth reference signal in FIG. 3 is 248/2 = 124, and a number of subcarriers of the fourth reference signal in FIG. 4 is 128/2 = 64.

It can be learned from FIG. 3 and FIG. 4 that accuracy of channel estimation can be improved by using an out-of-band DMRS, and BLER performance can be improved. In a configuration shown in FIG. 3, performance can be improved by a maximum of about 0.5 dB when the BLER is 10⁻¹. In a configuration shown in FIG. 4, performance can be improved by a maximum of about 0.3 dB when the BLER is 10⁻¹.

The foregoing embodiment describes a first apparatus performing channel estimation based on a reference signal of another apparatus. The following describes the scenario where the base station may send the reference signal of the another apparatus to the first apparatus based on a processing capability of the first apparatus.

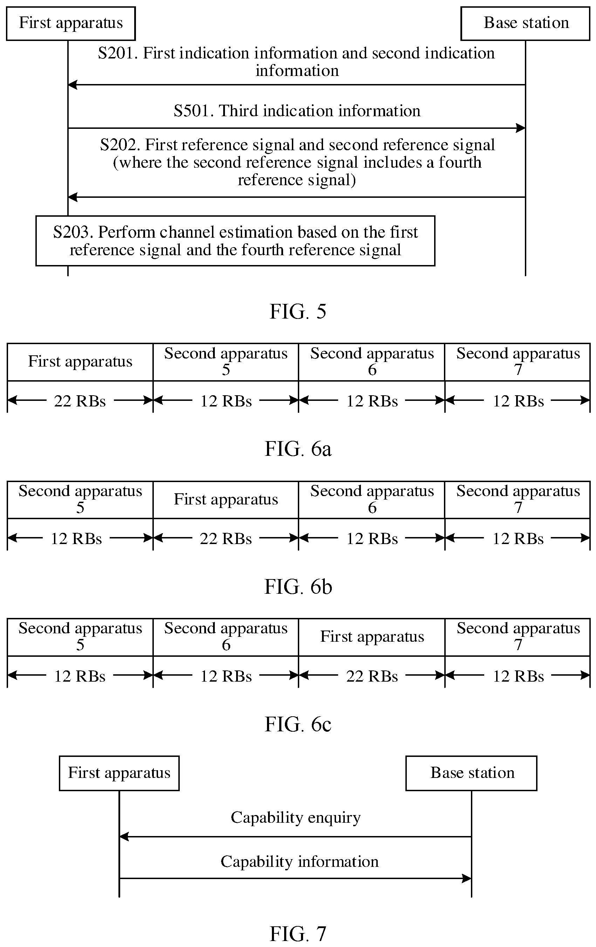

Refer to FIG. 5. In some embodiments, before S202, S501 is further included.

S501. The first apparatus sends third indication information. Correspondingly, the base station receives the third indication information.

The third indication information indicates a capability of the first apparatus to perform channel estimation based on a third reference signal, and the third reference signal is different from the first reference signal. In other words, the third reference signal may be a reference signal other than the first reference signal.

The third reference signal may include the second reference signal.

In some embodiments, the capability of the first apparatus to perform channel estimation is a maximum number *N_{FFT}* of FFT points that can be processed by the first apparatus. For related descriptions of *N_{FFT}* , refer to the following.

For example, the third indication information may indicate that the first apparatus has the capability to perform channel estimation based on the third reference signal. Alternatively, the third indication information may indicate that the first apparatus does not have the capability to perform channel estimation based on the third reference signal. For example, the third indication information may indicate, by using 1 bit, the capability of the first apparatus to perform channel estimation based on the third reference signal. A value of the bit being 1 indicates that the first apparatus has the capability to perform channel estimation based on the third reference signal. A value of the bit being 0 indicates that the first apparatus does not have the capability to perform channel estimation based on the third reference signal.

In some embodiments, the second indication information is determined based on the third indication information. The base station determines the second indication information based on the third indication information. If the third indication information indicates that the first apparatus has the capability to perform channel estimation based on the third reference signal, the base station sends the second indication information to the first apparatus. For another example, if the third indication information indicates that the first apparatus does not have the capability to perform channel estimation based on the second reference signal, the base station does not send the second indication information to the first apparatus, so that communication resources are saved.

In some embodiments, when the base station sends the second reference signal to the second apparatus, the base station sends the second indication information to the first apparatus.

In some embodiments, the third indication information indicates a capability level, and that the second indication information is determined based on the third indication information includes: The second reference signal indicated by the second indication information is determined based on the third indication information.

For example, the third indication information may indicate, by using 2 bits, a level of a capability of the first apparatus to perform channel estimation based on a reference signal. For example, 00 indicates a level 0, 01 indicates a level 1, 10 indicates a level 2, and 11 indicates a level 3. The level 0 indicates that the first apparatus does not have the capability to perform channel estimation based on a reference signal. The level 1 indicates that the first apparatus has a capability to perform channel estimation based on a reference signal with less than or equal to 256 subcarriers. The level 2 indicates that the first apparatus has a capability to perform channel estimation based on a reference signal with less than or equal to 512 subcarriers. The level 3 indicates that the first apparatus has a capability to perform channel estimation based on a reference signal with less than or equal to 1024 subcarriers.

The base station obtains the capability level of the first apparatus based on the third indication information, and the base station may send the second indication information to the first apparatus based on the capability level of the first apparatus. The base station may determine the second indication information based on the third indication information, where the second indication information may indicate a portion of the reference signals of the second apparatuss.

For example, the base station obtains, based on the third indication information, a number of subcarriers in which the first apparatus may perform channel estimation based on the third reference signal. For example, the third indication information indicates that the capability level of the first apparatus is the level 2. The first reference signal allocated by the base station to the first apparatus occupies 22 RBs, that is, 264 subcarriers. In this case, the base station may learn that the first apparatus may further perform channel estimation based on 248 subcarriers.

If the second apparatuss include a second apparatus 4, and the second apparatus 4 occupies 22 RBs, that is, 264 subcarriers, the base station may indicate a second reference signal with 22 RBs of the second apparatus 4 to the first apparatus. 264 > 248. Therefore, the first apparatus may perform estimation based on 512 subcarriers by using the first reference signal and a reference signal of the second apparatus 4, to improve estimation accuracy.

If the second apparatuss include a second apparatus 5 and a second apparatus 6, and the second apparatus 5 and the second apparatus 6 each occupy 12 RBs, that is, 144 subcarriers, the base station may indicate second reference signals with a total of 24 RBs of the second apparatus 5 and the second apparatus 6 to the first apparatus.

If the second apparatuss include a second apparatus 5 to a second apparatus 7, and each of the second apparatus 5 to the second apparatus 7 occupies 12 RBs, the base station may indicate second reference signals with a total of 24 RBs of the second apparatus 5 and the second apparatus 6 to the first apparatus, that is, 288 subcarriers. 288 > 248. Therefore, a second reference signal of the second apparatus 7 is not indicated to the first apparatus. When a number of subcarriers of the reference signals of the second apparatuss exceeds a processing capability of the first apparatus, the base station may not indicate, to the first apparatus, a subcarrier that exceeds the processing capability of the first apparatus, so as to reduce resources occupied by the second indication information.

Refer to FIG. 6a. In the foregoing example, spectrums of the second apparatus 5 and the second apparatus 6 are adjacent to a spectrum of the first apparatus, and a distance between a spectrum of the second apparatus 7 and the spectrum of the first apparatus exceeds 512 subcarriers, that is, exceeds the capability of the first apparatus. The first apparatus cannot use the spectrum of the second apparatus 7 to perform channel estimation.

Refer to FIG. 6b and FIG. 6c. A distance between the spectrum of the second apparatus 7 and the spectrum of the first apparatus does not exceed 512 subcarriers, and the base station may also indicate the second reference signals of the second apparatus 6 and the second apparatus 7 to the first apparatus.

For another example, the third indication information indicates that the capability level of the first apparatus is the level 3. If the second apparatuss include a second apparatus 5 to a second apparatus 7, and each of the second apparatus 5 to the second apparatus 7 occupies 12 RBs, the base station may indicate second reference signals of the second apparatus 5 to the second apparatus 7 to the first apparatus. In some embodiments, refer to FIG. 7. The base station may enquire the capability and/or the capability level from the first apparatus by using high layer signaling, and the first apparatus reports the capability and/or the capability level to the base station. For example, an enquiry field for a capability to perform channel estimation on a reference signal or a capability level is added to capability enquiry (UECapabilityEnquiry) signaling, and a field for the capability to perform channel estimation on the reference signal or the capability level is added to capability information (UECapabilityInformation) signaling.

In this solution, the base station may send the second indication information based on the capability level of the first apparatus, so that when the capability level of the first apparatus is low, the second indication information indicates fewer reference signals, and communication resources are reduced. When the capability level of the first apparatus is high, the base station may indicate more reference signals to the first apparatus, so that the first apparatus performs channel estimation based on more reference signals, to better improve performance of channel estimation performed by the first apparatus. For example, as shown in FIG. 3 and FIG. 4, more resources of the fourth reference signal used by the first apparatus indicate greater performance improvement.

That the base station activates or deactivates sending of the second indication information to indicate the second reference signal to the first apparatus or not indicate the second reference signal to the first apparatus is described below. According to this solution, the first apparatus can narrow down a range of blindly detecting DCI, to reduce overheads consumed by blindly detecting the DCI.

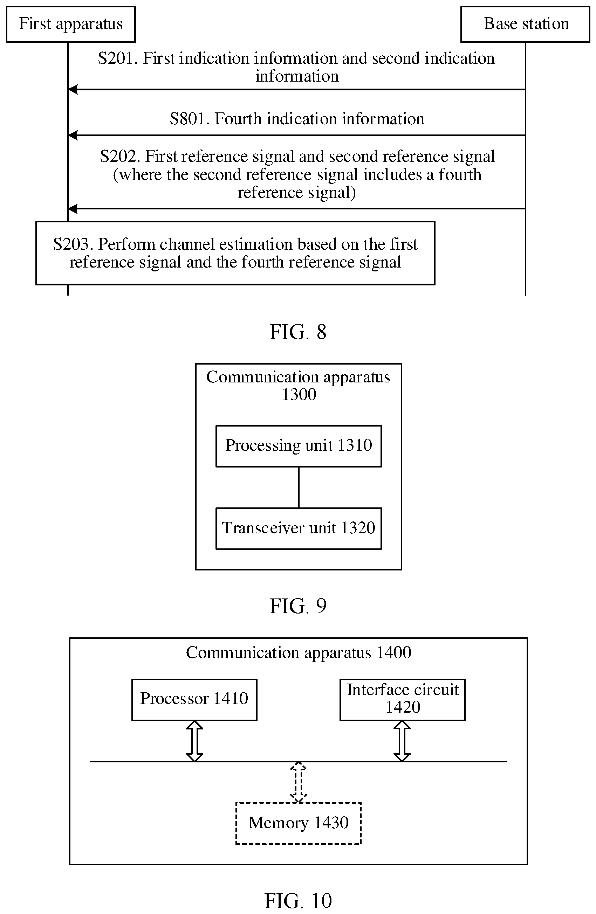

Refer to FIG. 8. In some embodiments, before S202, S801 is further included.

S801. The base station sends fourth indication information. Correspondingly, the first apparatus receives the fourth indication information.

In some embodiments, the fourth indication information indicates whether the base station sends the second reference signal. In other words, the fourth indication information indicates whether the base station already sends the second reference signal. Alternatively, the fourth indication information indicates that the base station may potentially send the second reference signal. Alternatively, the fourth indication information indicates that the base station sends a fourth reference signal. Alternatively, the fourth indication information indicates that the base station does not send a fourth reference signal. Alternatively, the fourth indication information indicates whether the first apparatus may potentially receive the second reference signal. The fourth indication information indicates that sending of the second reference signal by the base station is activated, or the fourth indication information indicates that sending of the second reference signal by the base station is deactivated. If the fourth indication information indicates that the base station sends the second reference signal, the first apparatus may receive the fourth reference signal based on the second indication information. For example, if the base station communicates with the second apparatus, the base station sends the second reference signal; or if the base station does not communicate with the second apparatus, the base station does not send the second reference signal.

In some embodiments, the base station may send the fourth indication information by using a MAC control element (MAC control element, MAC CE).

In some other embodiments, the base station may send the fourth indication information by using a broadcast signal.

In some other embodiments, the base station may send the fourth indication information by using RRC signaling.

In the foregoing embodiments, the base station sends the fourth indication information by using, for example, the MAC CE, the broadcast signal, or the RRC signaling, instead of DCI. The fourth indication information indicates a format of the DCI.

For example, if the base station indicates, in the fourth indication information, that the second reference signal is sent, or indicates that the first apparatus performing channel estimation based on a reference signal other than that of the first apparatus is activated, the base station sends DCI in a first format to the first apparatus. After receiving the fourth indication information, the first apparatus may receive the DCI in the first format, where the DCI in the first format includes a field of the second indication information. If the base station indicates, in the fourth indication information that the second reference signal is not sent, the base station sends DCI in a second format to the first apparatus. After receiving the fourth indication information, the first apparatus may receive the DCI in the second format, where the DCI in the second format does not include a field of the second indication information.

In this solution, the first apparatus is indicated to receive the DCI by using different DCI formats based on the fourth indication information, so as to parse the DCI sent by the base station. In this way, when the base station sends the DCI in different formats, the first apparatus does not need to blindly detect DCI in a plurality of formats or with a plurality of lengths, so that resources of the first apparatus are saved.

It should be noted that the first format and the second format may be one type of format, and are not limited to only one type of format.

It should be noted that the method provided in this embodiment of this application may be used in other scenarios in which a terminal needs to blindly detect DCI of a plurality of structures due to modification of a DCI structure, such as addition of a field or addition of a new DCI format. To be specific, when the format of the DCI is modified, the base station may deliver indication information to the terminal, to indicate whether a function that causes changes in the format of the DCI is used, so that the terminal can receive the DCI based on a small number of known DCI formats, without blindly detecting DCI of all structures, and resources are saved.

In some other embodiments, the fourth indication information may be a first bit in the DCI.

For example, the base station may send the second indication information by using the broadcast signal. The fourth indication information being 1 indicates that the base station sends the second indication information, and the fourth indication information being 0 indicates that the base station does not send the second indication information. After the first apparatus receives the fourth indication information, if the fourth indication information is 1, the first apparatus may receive the broadcast signal, to receive the second indication information. If the fourth indication information is 0, the first apparatus may not receive the broadcast signal.

In some embodiments, the first bit is an initialization bit of a DMRS sequence. In this solution, the first apparatus and the second apparatus are not in a multi-user MIMO (multi-user MIMO) scenario, and there is no need to use the initialization bit of the DMRS sequence. In this solution, an initialization bit of a sequence is reused, so that a structure of existing DCI does not need to be modified, that the first apparatus receives the reference signal of the second apparatus may be indicated by using the existing DCI, and resources consumed by the first apparatus to blindly detect the DCI can be reduced.

In some embodiments, S201 may include: Send the second indication information when one or more of the following conditions are satisfied. A number of subcarriers of the second reference signal is greater than or equal to a first threshold. Alternatively, a ratio of the number of subcarriers of the second reference signal to a number *N_{FFT}* of fast Fourier transform (fast Fourier transform, FFT) points is greater than or equal to a second threshold, where *N_{FFT}* is determined based on a number of subcarriers of the first reference signal, and *N_{FFT}* satisfies the following formula: ${N}_{FFT} = {2}^{\left⌈{log}_{2}^{{N}_{SC}}\right⌉ + M} + P .$

M and P are nonnegative integers, *N_{SC}* is the number of subcarriers of the first reference signal, and ┌ ┐ represents a rounding-up operation. Alternatively, a modulation and coding scheme MCS of the first apparatus is less than or equal to a third threshold.

The number of subcarriers of the second reference signal may alternatively be a number of resource blocks of the second reference signal, and the number of subcarriers of the first reference signal may alternatively be a number of resource blocks of the first reference signal. For example, the first threshold may be 24 subcarriers or two resource blocks. When the number of subcarriers of the second reference signal is greater than 24, the base station may send the second indication information. Refer to FIG. 3 and FIG. 4. A larger number of subcarriers of the second reference signal indicates a better channel estimation effect of the first apparatus. The first threshold is set, and when the channel estimation effect of the first apparatus is not greatly improved, the base station may not send the second indication information or the second reference signal to the first apparatus, so that communication resources are saved.

For example, a value of the second threshold is 10%, 15%, 30%, or the like. The base station determines the ratio of the number of subcarriers of the second reference signal to the number *N_{FFT}* of FFT points, and when the ratio is small, the base station may not send the second indication information or the second reference signal to the first apparatus, so that communication resources are saved.

Refer to FIG. 3 and FIG. 4. A smaller MCS of the first apparatus, that is, a lower signal-to-noise ratio (signal-to-noise ratio, SNR) of an operating point, indicates greater performance improvement. Therefore, the base station sends the second indication information when the MCS of the first apparatus is less than or equal to the third threshold, so that communication resources can be saved.

It should be noted that the foregoing correspondence between numbers of resource blocks and subcarriers is merely an example. In an evolution process of a communication system, the correspondence may change, and the base station may obtain a number of subcarriers based on a correspondence between a resource block and a subcarrier in a current system. For example, one resource block corresponds to 12 subcarriers.

Processing performed by a single execution entity (for example, the first apparatus or the base station) shown in embodiments of this application may alternatively be performed by a plurality of execution entities. These execution entities may be logically and/or physically separated. This is not limited.

It should be noted that, in the foregoing embodiments, an example in which a terminal performs channel estimation based on a DMRS in a 5G system is used. The method provided in embodiments of this application may be further applied to another communication system. An apparatus other than the terminal performs channel estimation based on a reference signal other than the DMRS. The foregoing example cannot be considered as a limitation on the foregoing embodiments of this application.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof. For example, a plurality of embodiments described above may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. This is not intended to indicate that the execution sequence is the only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

It may be understood that, to implement functions in the foregoing embodiments, the base station and the terminal include corresponding hardware structures and/or software modules for performing various functions. A person skilled in the art should be easily aware that, in combination with the units and method steps in the examples described with reference to embodiments disclosed in this application, this application can be implemented by hardware or a combination of hardware and computer software. Whether a function is performed by hardware or hardware driven by computer software depends on particular application scenarios and design constraint conditions of the technical solutions.

FIG. 9 and FIG. 10 are diagrams of structures of possible communication apparatuses according to embodiments of this application. These communication apparatuses may be configured to implement functions of the terminal or the base station in the foregoing method embodiments, and therefore can also implement beneficial effects of the foregoing method embodiments. In this embodiment of this application, the communication apparatuses may be the terminals 120 shown in FIG. 1, may be the base stations 110 shown in FIG. 1, or may be modules (for example, chips) used in the terminal or the base station.

As shown in FIG. 9, the communication apparatus 1300 includes a processing unit 1310 and a transceiver unit 1320. The communication apparatus 1300 is configured to implement functions of the terminal or the base station in the method embodiment shown in FIG. 2, FIG. 5, or FIG. 8.

When the communication apparatus 1300 is configured to implement the functions of the terminal in the method embodiment shown in FIG. 2, the transceiver unit 1320 is configured to receive first indication information and second indication information, and receive a first reference signal and a fourth reference signal; and the processing unit 1310 is configured to perform channel estimation based on the first reference signal and the fourth reference signal.

When the communication apparatus 1300 is configured to implement the functions of the base station in the method embodiment shown in FIG. 2, the transceiver unit 1320 is configured to send the first indication information and the second indication information, and send the first reference signal and a second reference signal; and the processing unit 1310 is configured to perform a processing-related function.

When the communication apparatus 1300 is configured to implement the functions of the terminal in the method embodiment shown in FIG. 5, the transceiver unit 1320 is further configured to send third indication information, and the processing unit 1310 is configured to perform a processing-related function.

When the communication apparatus 1300 is configured to implement the functions of the base station in the method embodiment shown in FIG. 5, the transceiver unit 1320 is further configured to receive the third indication information, and the processing unit 1310 is configured to perform the processing-related function.

When the communication apparatus 1300 is configured to implement the functions of the terminal in the method embodiment shown in FIG. 8, the transceiver unit 1320 is further configured to receive fourth indication information, and the processing unit 1310 is configured to perform a processing-related function.

When the communication apparatus 1300 is configured to implement the functions of the base station in the method embodiment shown in FIG. 8, the transceiver unit 1320 is further configured to send the fourth indication information, and the processing unit 1310 is configured to perform the processing-related function. For more detailed descriptions of the processing unit 1310 and the transceiver unit 1320, refer to related descriptions in the method embodiments shown in FIG. 2, FIG. 5, and FIG. 8.

As shown in FIG. 10, the communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to store instructions executed by the processor 1410, store input data required by the processor 1410 to run the instructions, or store data generated after the processor 1410 runs the instructions.

When the communication apparatus 1400 is configured to implement the method shown in FIG. 2, FIG. 5, or FIG. 8, the processor 1410 is configured to implement the function of the foregoing processing unit 1310, and the interface circuit 1420 is configured to implement the function of the foregoing transceiver unit 1320.

When the communication apparatus is a chip used in a terminal, the chip in the terminal implements the functions of the terminal in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to the base station may be understood as that the information is first sent to another module (for example, the radio frequency module or the antenna) in the terminal, and then sent by these modules to the base station.

When the communication apparatus is a chip used in a base station, the chip in the base station implements the functions of the base station in the foregoing method embodiments. That the chip in the base station receives information from a terminal may be understood as that the information is first received by another module (for example, a radio frequency module or an antenna) in the base station, and then sent by these modules to the chip in the base station. That the chip in the base station sends information to the terminal may be understood as that the information is first sent to another module (for example, the radio frequency module or the antenna) in the base station, and then sent by these modules to the terminal.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entity A and the entity B herein each may be a RAN node or a terminal, or may be a module in the RAN node or the terminal. Information receiving and sending may be information exchange between a RAN node and a terminal, for example, information exchange between a base station and a terminal. Information receiving and sending may alternatively be information exchange between two RAN nodes, for example, information exchange between a CU and a DU. Information receiving and sending may alternatively be information exchange between different modules in an apparatus, for example, information exchange between a chip in a terminal and another module in the terminal, or information exchange between a chip in a base station and another module in the base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist as discrete components in the base station or the terminal.

All or a part of the foregoing embodiments may be implemented by software, hardware, firmware, or any combination thereof. When the software is used to implement the foregoing embodiments, all or a part of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disk; or may be a semiconductor medium, for example, a solid-state drive. The computer-readable storage medium may be a volatile or non-volatile storage medium, or may include two types of storage media: a volatile storage medium and a non-volatile storage medium.

In the specification and accompanying drawings of this application, terms "first", "second", and the like are intended to distinguish between objects or distinguish between processing of a same object. Terms such as "first" and "second" may distinguish between same items or similar items with basically same functions and purposes. For example, a first apparatus and a second apparatus are merely used to distinguish between different devices, and do not limit a sequence thereof. A person skilled in the art may understand that the terms such as "first" and "second" do not limit a number or an execution sequence, and the terms such as "first" and "second" do not indicate a definite difference.

"At least one" means one or more, and "a plurality of" means two or more.

"And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner.

## Claims

1. A communication method, applied to a first apparatus, wherein the method comprises:
receiving first indication information and second indication information, wherein the first indication information indicates a first reference signal, the second indication information indicates a second reference signal, the first reference signal is a reference signal of the first apparatus, and the second reference signal is a reference signal of a second apparatus;
receiving, based on the first indication information and the second indication information, the first reference signal and a fourth reference signal, wherein the fourth reference signal belongs to the second reference signal; and
performing channel estimation based on the first reference signal and the fourth reference signal.

2. The method according to claim 1, wherein a first beam serves the first apparatus and the second apparatus.

3. The method according to claim 1 or 2, wherein a time-frequency resource of the first reference signal is different from a time-frequency resource of the second reference signal.

4. The method according to any one of claims 1 to 3, wherein that the first indication information indicates the first reference signal comprises: the first indication information indicates one or more of the following of the first reference signal: configuration information of the first reference signal, the time-frequency resource of the first reference signal, or an antenna port number of the first reference signal; or
that the second indication information indicates the second reference signal comprises: the second indication information indicates one or more of the following of the second reference signal: configuration information of the second reference signal, the time-frequency resource of the second reference signal, or an antenna port number of the second reference signal.

5. The method according to any one of claims 1 to 4, wherein before the receiving the fourth reference signal, the method further comprises: sending third indication information, wherein the third indication information indicates a capability of the first apparatus to perform channel estimation based on a third reference signal, and the third reference signal is different from the first reference signal.

6. The method according to claim 5, wherein the second indication information is determined based on the third indication information.

7. The method according to claim 6, wherein the third indication information indicates a capability level, and that the second indication information is determined based on the third indication information comprises: the time-frequency resource of the second reference signal indicated by the second indication information is determined based on the third indication information.

8. The method according to any one of claims 1 to 7, wherein that the second indication information indicates the information about the second reference signal comprises: the second indication information indicates, through downlink control information DCI, the time-frequency resource of the second reference signal and/or the antenna port number of the second reference signal.

9. The method according to any one of claims 1 to 8, wherein before the receiving the fourth reference signal, the method further comprises: receiving fourth indication information, wherein the fourth indication information indicates whether a radio access network device has sent the second reference signal.

10. The method according to claim 9, wherein the fourth indication information indicates a format of the downlink control information DCI.

11. The method according to claim 9, wherein the fourth indication information is a first bit in the DCI, and the first bit indicates whether the radio access network device has sent the second reference signal.

12. The method according to claim 11, wherein the first bit is an initialization bit of a demodulation reference signal DMRS sequence.

13. The method according to any one of claims 1 to 12, wherein the first reference signal and the second reference signal are demodulation reference signals DMRSs.

14. The method according to any one of claims 1 to 13, wherein the fourth reference signal is the entire second reference signal.

15. The method according to any one of claims 1 to 13, wherein the fourth reference signal is a portion of the second reference signal.

16. The method according to any one of claims 1 to 15, wherein the first reference signal and the second reference signal are formed using a same precoding codebook.

17. The method according to any one of claims 4 to 16, wherein the configuration information of the first reference signal comprises one or more of the following: a position of the first reference signal, a type of the first reference signal, or a time domain symbol length of the first reference signal.

18. The method according to any one of claims 4 to 17, wherein the configuration information of the second reference signal comprises one or more of the following: a position of the second reference signal, a type of the second reference signal, or a time domain symbol length of the second reference signal.

19. The method according to any one of claims 5 to 7, wherein if the third indication information indicates that the first apparatus has the capability to perform channel estimation based on the third reference signal, a radio access network device sends the second indication information.

20. The method according to any one of claims 5 to 7, wherein if the third indication information indicates that the first apparatus does not have the capability to perform channel estimation based on the third reference signal, a radio access network device does not send the second indication information.

21. The method according to claim 19, wherein when the third indication information indicates that the first apparatus has a first capability to perform channel estimation based on the third reference signal, the second indication information indicates a first time-frequency resource; when the third indication information indicates that the first apparatus has a second capability to perform channel estimation based on the third reference signal, the second indication information indicates a second time-frequency resource; and when the first capability is greater than the second capability, the first time-frequency resource is greater than the second time-frequency resource.

22. The method according to any one of claims 1 to 21, wherein that the second indication information indicates the information about the second reference signal comprises: the second indication information indicates, through radio resource control RRC signaling, the configuration information of the second reference signal.

23. The method according to any one of claims 1 to 22, wherein the second indication information is received through a broadcast signal.

24. The method according to any one of claims 9 to 13, wherein the receiving the second indication information comprises: if the fourth indication information indicates that the radio access network device has sent the second indication information, receiving the second indication information through a broadcast signal.

25. The method according to any one of claims 1 to 24, wherein the first reference signal and the second reference signal are demodulation reference signals DMRSs.

26. A communication method, comprising:
sending first indication information and second indication information, wherein the first indication information indicates a first reference signal, the second indication information indicates a second reference signal, the first reference signal is a reference signal of the first apparatus, and the second reference signal is a reference signal of a second apparatus; and
sending the first reference signal and the second reference signal.

27. The method according to claim 26, wherein a first beam serves the first apparatus and the second apparatus.

28. The method according to claim 26 or 27, wherein a time-frequency resource of the first reference signal is different from a time-frequency resource of the second reference signal.

29. The method according to any one of claims 26 to 28, wherein that the first indication information indicates the first reference signal comprises: the first indication information indicates one or more of the following of the first reference signal: configuration information of the first reference signal, the time-frequency resource of the first reference signal, or an antenna port number of the first reference signal; or
that the second indication information indicates the second reference signal comprises: the second indication information indicates one or more of the following of the second reference signal: configuration information of the second reference signal, the time-frequency resource of the second reference signal, or an antenna port number of the second reference signal.

30. The method according to any one of claims 27 to 29, wherein before the sending the second reference signal, the method further comprises: receiving third indication information, wherein the third indication information indicates a capability of the first apparatus to perform channel estimation based on a third reference signal, and the third reference signal is different from the first reference signal.

31. The method according to claim 30, wherein the second indication information is determined based on the third indication information.

32. The method according to claim 31, wherein the third indication information indicates a capability level, and that the second indication information is determined based on the third indication information comprises: the time-frequency resource of the second reference signal indicated by the second indication information is determined based on the third indication information.

33. The method according to any one of claims 26 to 32, wherein that the second indication information indicates the information about the second reference signal comprises: the second indication information indicates, through downlink control information DCI, the time-frequency resource of the second reference signal and/or the antenna port number of the second reference signal.

34. The method according to any one of claims 26 to 33, wherein before the sending the second reference signal, the method further comprises: sending fourth indication information, wherein the fourth indication information indicates whether the second reference signal is sent.

35. The method according to claim 34, wherein the fourth indication information indicates a format of the downlink control information DCI.

36. The method according to claim 34, wherein the fourth indication information is a first bit in the DCI, and the first bit indicates whether the second reference signal is sent.

37. The method according to claim 36, wherein the first bit is an initialization bit of a demodulation reference signal DMRS sequence.

38. The method according to any one of claims 26 to 37, wherein the sending the second indication information comprises: sending the second indication information when one or more of the following conditions are satisfied:
a number of subcarriers of the second reference signal is greater than or equal to a first threshold;
a ratio of the number of subcarriers of the second reference signal to a number *N_{FFT}* of FFT points is greater than or equal to a second threshold, wherein *N_{FFT}* is determined based on a number of subcarriers of the first reference signal, and *N_{FFT}* satisfies the following formula: ${N}_{FFT} = {2}^{\left⌈{log}_{2}^{{N}_{SC}}\right⌉ + M} + P ,$ wherein
M and P are nonnegative integers, *N_{SC}* is the number of subcarriers of the first reference signal, and ┌ ┐ represents a rounding-up operation; or
a modulation and coding scheme MCS of the first apparatus is less than or equal to a third threshold.

39. The method according to any one of claims 26 to 38, wherein the first reference signal and the second reference signal are demodulation reference signals DMRSs.

40. The method according to any one of claims 26 to 39, wherein the first reference signal and the second reference signal are formed using a same precoding codebook.

41. The method according to any one of claims 29 to 40, wherein the configuration information of the first reference signal comprises one or more of the following: a position of the first reference signal, a type of the first reference signal, or a time domain symbol length of the first reference signal.

42. The method according to any one of claims 29 to 41, wherein the configuration information of the second reference signal comprises one or more of the following: a position of the second reference signal, a type of the second reference signal, or a time domain symbol length of the second reference signal.

43. The method according to any one of claims 30 to 32, wherein if the third indication information indicates that the first apparatus has the capability to perform channel estimation based on the third reference signal, the second indication information is sent.

44. The method according to any one of claims 30 to 32, wherein if the third indication information indicates that the first apparatus does not have the capability to perform channel estimation based on the third reference signal, the second indication information is not sent.

45. The method according to claim 43, wherein when the third indication information indicates that the first apparatus has a first capability to perform channel estimation based on the third reference signal, the second indication information indicates a first time-frequency resource; when the third indication information indicates that the first apparatus has a second capability to perform channel estimation based on the third reference signal, the second indication information indicates a second time-frequency resource; and when the first capability is greater than the second capability, the first time-frequency resource is greater than the second time-frequency resource.

46. The method according to any one of claims 26 to 45, wherein that the second indication information indicates the information about the second reference signal comprises: the second indication information indicates, through radio resource control RRC signaling, the configuration information of the second reference signal.

47. The method according to any one of claims 26 to 46, wherein the second indication information is sent by using a broadcast signal.

48. The method according to any one of claims 34 to 47, wherein the fourth indication information is sent by using a MAC CE, a broadcast signal, or RRC signaling.

49. The method according to any one of claims 34 to 48, wherein if the fourth indication information indicates that a radio access network device has sent the second reference signal, the method further comprises: sending DCI in a first format, wherein the DCI in the first format comprises a field of the second indication information.

50. The method according to any one of claims 34 to 48, wherein if the fourth indication information indicates that a radio access network device does not send the second reference signal, the method further comprises: sending DCI in a second format, wherein the DCI in the second format does not comprise a field of the second indication information.

51. The method according to any one of claims 26 to 50, wherein the second indication information is sent by using the broadcast signal.

52. The method according to any one of claims 34 to 51, wherein sending the second indication information comprises: if the fourth indication information indicates that the radio access network device sends the second indication information, sending the second indication information by using the broadcast signal.

53. A computer-readable storage medium, wherein the computer-readable storage medium stores instructions, and when the instructions are run on a communication apparatus, the communication apparatus is caused to perform the method according to any one of claims 1 to 25, or the communication apparatus is caused to perform the method according to any one of claims 26 to 52.

54. A communication apparatus, comprising a module configured to perform the method according to any one of claims 1 to 25 or a module configured to perform the method according to any one of claims 26 to 52.

55. A communication apparatus, wherein the communication apparatus is configured to implement the method according to any one of claims 1 to 25; the communication apparatus comprises a corresponding module, unit, or means (means) for implementing the method according to any one of claims 1 to 25; the module, unit, or means is capable of being implemented by hardware, software, or hardware executing corresponding software; and the hardware or software comprises one or more modules or units corresponding to the method according to any one of claims 1 to 25.

56. A communication apparatus, wherein the communication apparatus is configured to implement the method according to any one of claims 26 to 52; the communication apparatus comprises a corresponding module, unit, or means (means) for implementing the method according to any one of claims 26 to 52; the module, unit, or means is capable of being implemented by hardware, software, or hardware executing corresponding software; and the hardware or software comprises one or more modules or units corresponding to the method according to any one of claims 26 to 52.

57. A communication apparatus, comprising a processor, wherein the processor is coupled to a memory, and the processor is configured to read and execute instructions in the memory, to cause the communication apparatus to perform the method according to any one of claims 1 to 25.

58. A communication apparatus, comprising a processor, wherein the processor is coupled to a memory, and the processor is configured to read and execute instructions in the memory, to cause the communication apparatus to perform the method according to any one of claims 26 to 52.

59. A chip system, wherein the chip system comprises a processor and an input/output port, the processor is configured to implement a processing function related to the method according to any one of claims 1 to 25, and the input/output port is configured to implement a receiving/sending function related to the method according to any one of claims 1 to 25.

60. The chip system according to claim 59, wherein the chip system further comprises a memory, and the memory is configured to store program instructions and data for implementing the functions related to the method according to any one of claims 1 to 25.

61. The chip system according to claim 59 or 60, wherein the chip system comprises a chip, or comprises a chip and a discrete device.

62. A chip system, wherein the chip system comprises a processor and an input/output port, the processor is configured to implement a processing function related to the method according to any one of claims 26 to 52, and the input/output port is configured to implement a receiving/sending function related to the method according to any one of claims 26 to 52.

63. The chip system according to claim 62, wherein the chip system further comprises a memory, and the memory is configured to store program instructions and data for implementing the functions related to the method according to any one of claims 26 to 52.

64. The chip system according to claim 62 or 63, wherein the chip system comprises a chip, or comprises a chip and a discrete device.

65. A communication apparatus, comprising a processor and a memory, wherein the memory is configured to store computer instructions, and when the processor executes the computer instructions, the communication apparatus is caused to perform the communication method according to any one of claims 1 to 25, or the communication apparatus is caused to perform the communication method according to any one of claims 26 to 52.

66. A computer program product, comprising a computer program or instructions, wherein when the computer program or the instructions are run on a computer, the computer is caused to perform the communication method according to any one of claims 1 to 25, or the computer is caused to perform the communication method according to any one of claims 26 to 52.

67. A system, comprising a first apparatus and a radio access network device, wherein the first apparatus performs the communication method according to any one of claims 1 to 25, and the radio access network device performs the communication method according to any one of claims 26 to 52.

68. The system according to claim 67, further comprising a second apparatus, wherein the radio access network device serves the first apparatus and the second apparatus through a first beam.

69. The system according to claim 68, wherein a first reference signal of the first apparatus and a second reference signal of the second apparatus are formed using a same precoding codebook.
